# EUROPEAN PATENT APPLICATION

(11) **EP 1 534 027 A2**
(43) Date of publication of application: **25.05.2005**
(21) Application number: 04256857.6
(22) Date of filing: 05.11.2004
(51) Int. Cl.: H04Q 7/30

(54) **Wireless distributed base station**

(30) Priority: 24.11.2003 US 720397
(71) Applicant: Lucent Technologies Inc., Murray Hill, NJ 07974-0636 (US)
(72) Inventor: Capece, Christopher, Lebanon, New Jersey 08833 (US); Mottahed, Behzad D., Upper Montclair, New Jersey 07981 (US)
(74) Representative: Watts, Christopher Malcolm Kelway, Dr.

(57) **Abstract**

A base transceiver station includes at least one base band unit and at least one radio frequency unit. The base transceiver station also includes a wireless link for coupling the baseband unit with the radio frequency unit. The baseband and radio frequency units may be spaced, in one example, at a distance of about 500 meters. In support of the wireless link, the base band unit(s) may comprise a multi-headed air interface antenna (e.g., one or more antenna heads per sector). The multi-headed air interface antenna may be tuned to support a data rate of at least 100 Mbps, and may comprise wideband and/or narrowband characteristics. Moreover, the radio frequency unit(s) may comprises an RF antenna for supporting the wireless link. The RF antenna may be tuned to support a data rate of at least 100 Mbps and also may comprise wideband and/or narrowband characteristics.

## Description

### BACKGROUND OF THE INVENTION

### I. FIELD OF THE INVENTION

The present invention relates generally to communications and, more particularly, to a wireless communications systems.

### II DESCRIPTION OF THE RELATED ART

Wireless communications systems provide wireless service to a number of wireless or mobile units situated within a geographic region. The geographic region supported by a wireless communications system is divided into spatially distinct areas commonly referred to as "cells." Each cell, ideally, may be represented by a hexagon in a honeycomb pattern. In practice, however, each cell may have an irregular shape, depending on various factors including the topography of the terrain surrounding the cell. Moreover, each cell is further broken into two or more sectors. Each cell is commonly divided into three sectors, each having a range of 120 degrees, for example.

A conventional cellular system comprises a number of cell sites or base transceiver stations geographically distributed to support the transmission and reception of communication signals to and from the wireless or mobile units. Each cell site handles communications within, as well as outside the cell. Moreover, the overall coverage area for the cellular system may be defined by the union of cells for all of the cell sites, where the coverage areas for nearby cell sites overlap to ensure, where possible, contiguous communication coverage within the outer boundaries of the system's coverage area.

When active, a wireless unit receives signals from at least one base station over a forward link (e.g., downlink) and transmits signals to at least one base station over a reverse link (e.g., uplink). Several approaches have been developed for defining links or channels in a cellular communication system, including time-division multiple access ("TDMA"), code-division multiple access ("CDMA") and orthogonal-frequency division multiple access ("OFDMA"), for example.

Each base transceiver station typically comprises one or more radio towers and one or more antennas for communicating with each of the wireless units in that cell. Moreover, each base transceiver station includes transmission equipment for communicating with a mobile switching center ("MSC"). A mobile switching center is responsible for, among other things, establishing and maintaining calls between the wireless units, between a wireless unit and a wireline unit through a public switched telephone network ("PSTN"), as well as between a wireless unit and a packet data network ("PDN"), such as the Internet. A base station controller ("BSC") administers the radio resources for one or more base transceiver stations and relays this information to the MSC.

To this purpose, the transmission equipment within each base transceiver station comprises at least one radio frequency unit ("RFU"). In addition to a power amplifier and a filter, each RFU includes at least one radio for communicating with mobile telephones over the air interface. Moreover, the transmission equipment also comprises at least one base band unit ("BBU"). Each BBU may include one or more processors for handling communication between the RFU and the mobile switching center, as well as channel cards.

Presently, each BBU in the base transceiver station is coupled via a dedicated hardline, such as a fiber optic or coaxial cable, to the mobile switching center. While the RFUs are placed in multiple locations to form the cells, the BBUs are separated from the RFUs they serve, thus forming a distributed system. For example, several base band subsystems may be located in a central area, with each base band subsystem using a dedicated link to its respective RFU via a point-to-point optical fiber or coaxial cable. This hard connection between BBU and RFU is labor intensive and expensive to complete, requiring special service workers to lay down the fiber optic or coaxial cable between the BBU and RFU. The topography of the location (e.g., mountain range) of the base transceiver station may also lend itself to spacing the BBU and RFU apart at even significant distances in order to improve performance. This spacing between the BBU and RFU may add significant cost to the base transceiver station. The real estate between the BBU and RFU, for example, may require a lease or a deed for the right to lay down the fiber optic or coaxial cable.

Consequently, a demand exists for a flexible base transceiver station that reduces the cost of laying down the fiber optic or coaxial cable between the BBU and RFU. Moreover, a demand exists for a flexible base transceiver station that circumvents the need for a lease, deed or legal right to lay down the fiber optic cable to couple the BBU and RFU together.

### SUMMARY OF THE INVENTION

The present invention provides for a base transceiver station with enhanced flexibility. The base transceiver station may provide an increasingly cost-effective approach by, for example, reducing and/or eliminating the need for laying down external and/or internal fiber optic or coaxial cable between components, such as the BBU and RFU. Moreover, the present invention may also provides a simpler configuration by, for example, reducing and/or eliminating the need for a lease, deed or legal right to lay down the fiber optic cable between components such as the BBU and RFU, for example.

In one embodiment, a base transceiver station of the present invention includes at least one base band unit and at least one radio frequency unit. The base transceiver station also includes a wireless link for coupling the baseband unit with the radio frequency unit. The baseband and radio frequency units may be spaced, in one example, at a distance of about 500 meters. In support of the wireless link, the base band unit(s) may comprise a multi-headed air interface antenna (e.g., one or more antenna heads per sector). The multi-headed air interface antenna may be tuned to support a data rate of at least 100 Mbps, and may comprise wideband and/or narrowband characteristics. Moreover, the radio frequency unit(s) may comprise an RF antenna for supporting the wireless link. The RF antenna may be tuned to support a data rate of at least 100 Mbps and also may comprise wideband and/or narrowband characteristics.

In another embodiment of the present invention, a base transceiver station may include a base band unit(s) and a radio frequency unit(s). The base band unit(s) may comprise at least two base band unit printed circuit boards and a base band unit wireless link for coupling the base band unit printed circuit boards to each other. The base band unit wireless link may comprise a range of at least 10 feet and may support a data rate of at least 100 Mbps. Similarly, the radio frequency unit(s) may comprises at least two radio frequency unit printed circuit boards and a radio frequency wireless link for coupling the radio frequency unit printed circuit boards to each other. The radio frequency wireless link may comprise a range of at least 10 feet and operate at a frequency range of at least 100 Mbps.

### BRIEF DESCRIPTION OF THE DRAWINGS

The present invention will be better understood from reading the following description of non-limiting embodiments, with reference to the attached drawings, wherein below:
**FIG. 1** depicts an embodiment of the present invention;
**FIG. 2** depicts another embodiment of the present invention; and
**FIG. 3** depicts another embodiment of the present invention.

It should be emphasized that the drawings of the instant application are not to scale but are merely schematic representations, and thus are not intended to portray the specific dimensions of the invention, which may be determined by skilled artisans through examination of the disclosure herein.

### DETAILED DESCRIPTION OF SPECIFIC EMBODIMENTS

The present invention provides for a base transceiver station with enhanced flexibility. The base transceiver station may provide an increasingly cost-effective approach by, for example, reducing and/or eliminating the need for laying down external and/or internal fiber optic or coaxial cable between components, such as the BBU and RFU. Moreover, the present invention may also provides a simpler configuration by, for example, reducing and/or eliminating the need for a lease, deed or legal right to lay down the fiber optic cable between components such as the BBU and RFU, for example.

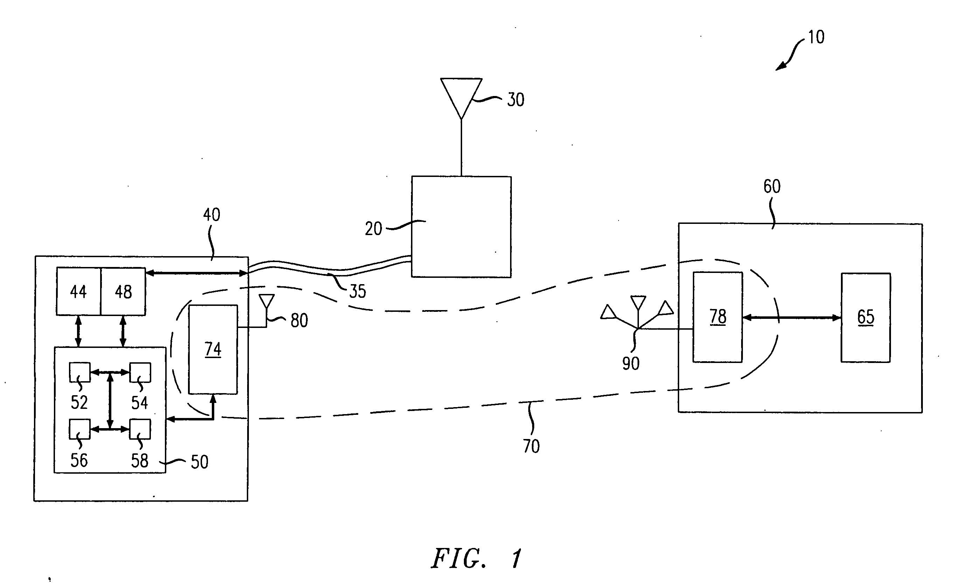

Referring to **FIG. 1**, an embodiment of the present invention is illustrated. More particularly, a wireless transceiver **10** is shown having a distributed architecture. Wireless transceiver **10** may be realized by a base transceiver station.

Wireless transceiver **10** comprises at least one radio tower **20**. Moreover, wireless transceiver **10** comprises one or more antennas **30** for communicating with each wireless unit in the cell. Each wireless transceiver **10** includes transmission equipment for communicating with a mobile switching center (not shown).

To circumvent the need for legal rights to lay down the fiber optic cable between sub-components of the base station, for example, wireless transceiver **10** may designed in accordance with a distributed architecture. This distribution may take into account the topography and/or landscape of the location of transceiver **10**. Cell coverage, moreover, may also be enhanced by means of the distributing architecture of transceiver **10**.

To distribute wireless transceiver **10**, components formulating the transmission equipment may be separated by functionality. The transmission equipment includes, for example, one or more radio frequency units ("RFUs") **40** coupled with tower **20** by means of a cable **35**. Each RFU comprises a power amplifier **44** and a filter **48**.

Moreover, each RFU **40** includes one or more radios **50**. Radio **50** performs various functions, including for communicating with mobile telephones over the air interface. To this end, each radio **50** comprises an intermediate frequency ("IF") section **52,** an in-phase and quadrature ("I&Q") section **54,** a radio frequency ("RF") section **56** and a digital section 58.

The transmission equipment of wireless transceiver **10** also comprises at least one base band unit ("BBU") **60**. Each BBU **60** includes one or more processors **65** for handling communication between the RFU and the mobile switching center. Currently, the connection between RFU **40** and the mobile switching center through BBU **60** is realized by means of cabling. In accordance with the present invention, components of the transmission equipment, generally, and more particularly, components of RFU **40** may be distributed. By this distribution, wireless transceiver **10** comprises a wireless link **70** for wirelessly coupling BBU **60** with RFU **40**. Wireless link **70** enables BBU **60** with RFU **40** to be spaced at 500 meters or less from each to take advantage of the terrain, topography and/or landscape of the location of transceiver **10**.

In one embodiment of the present invention, BBU **60** may be wireless coupled through wireless link **70** with one or more radios **50** of RFU **40.** More particularly, BBU **60** may be wirelessly coupled with one or more sub-components of radio **50** - e.g., BBU **60** may be wirelessly coupled with IF section **52,** I&Q section **54,** RF section **56** and/or digital section **58.** To simplify the architecture, amplifier **44** and **48** may be likely collocated with any one or more of the sub-components of radio **50**.

To distribute wireless transceiver **10**, wireless link **70** may necessitate additional hardware and/or software to insure proper and secure wireless communication occurs between BBU **60** and radio **50** of RFU **40.** In support of this purpose, radio **50** comprises a transmitter-receiver **74**, while BBU **60** also comprises a transmitter-receiver **78**. Each transmitter-receiver, **74** and **78,** comprises either a line-of-sight transceiver (e.g., operating at frequency of about 4 GHz) and/or a broadcast transceiver (e.g., operating at a frequency of at least 100 MHz). Each transmitter-receiver, **74** and **78,** coupled with either an additional antenna (not shown) or utilizing the existing antenna structure for the general purpose of the wireless transceiver **10**, thereby enabling wireless signals to flow between BBU **60** and radio **50** of RFU **40.** The wireless signals transmitted and received by BBU **60** and radio **50** may be identical in content to those that might be communicated in known non-distributed architectures. However, differences may include security, redundancy and error correction because of the reliance on transmission and reception over the air.

To insure secure wireless communication between BBU **60** and radio **50**, each transmitter-receiver, **74** and **78**, may also comprise various additional components. For example, each transmitter-receiver, **74** and **78** may include a demultiplexer for demultiplexing an incoming received signal, an authenticator for authenticating the incoming received signal and a decryptor for decrypting the received signal. Similarly, each transmitter-receiver, **74** and **78**, may also comprise a multiplexer for multiplexing a signal to be transmitted, a deauthenticator for deauthenticating the signal to be transmitted, and an encryptor for encrypting the signal to be transmitted.

In furtherance of the distributed architecture, RFU **40** and BBU **60** of wireless transceiver **10** each also may comprise an additional antenna element. Each radio **50** may comprise an RF antenna **80** for supporting wireless link **70**. In one example, RF antenna **80** in conjunction with each transmitter-receiver **74** support a data rate through the wireless link of at least 100 Mbps.

Furthermore, each BBU **60** may comprise at least one multi-headed air interface antenna **90** for supporting wireless link **70**. In one embodiment, the multi-headed air interface antenna may have at least one antenna head designated per sector of a cell. Moreover, the multi-headed air interface antenna **90** in conjunction with each transmitter-receiver **78** of BBU **60** may support, in one example, a data rate through the wireless link of about 100 Mbps.

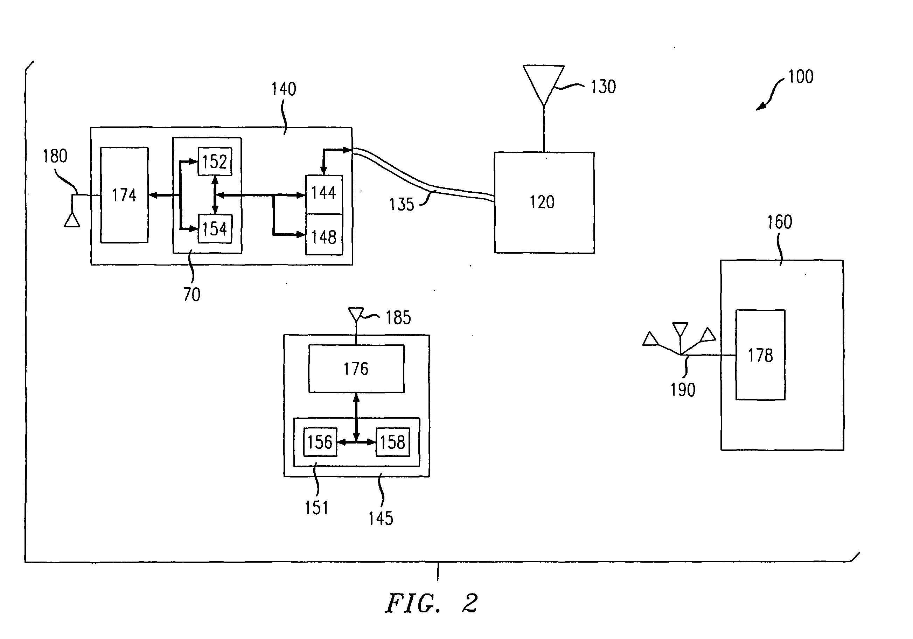

Referring to **FIG. 2**, another embodiment of the present invention is illustrated. More particularly, a wireless base transceiver station **100** is shown having a distributed architecture. Base transceiver station **100** employs a distributed architecture to circumvent the need for legal rights to lay down the fiber optic cable, much like wireless transceiver **10** of **FIG. 1.** As stated hereinabove, this distribution may take into account the topography and/or landscape of the location of base transceiver station **100**. Cell coverage, moreover, may also be enhanced by means of the distributing architecture for transceiver **100**.

To distribute base transceiver station **100**, components formulating the transmission equipment may be separated by functionality. The transmission equipment includes, for example, a first and a second radio frequency sub-units **140** and **145** forming an RFU. For illustration purposes, first RFU **140** is coupled with tower **120** by means of a cable **135** and incorporates a power amplifier **144** and a filter **148.**

Base transceiver station **100** has a distributed radio architecture. More particularly, base transceiver station **100** comprises a first and a second radio frequency sub-units, **140** and **145.** Within each radio frequency sub-unit, sections of the radio architecture are incorporated. Consequently, radio frequency sub-unit **140** includes a first radio segment **150** having an IF section **152** and an I&Q section **154,** while RFU includes a second radio segment **151** comprising an RF section **156** and a digital section **158.** First and second radio frequency sub-units, **140** and **145,** are wirelessly coupled with each other by means of transmitter-receivers, **174** and **176**, and antennas, **180** and **185**. By this arrangement, first and second radio frequency sub-units, **140** and **145,** and thusly, radios **150** and **151** may be spaced from each other to take advantage of the terrain and topography of the location where base transceiver station **100** is to be situated.

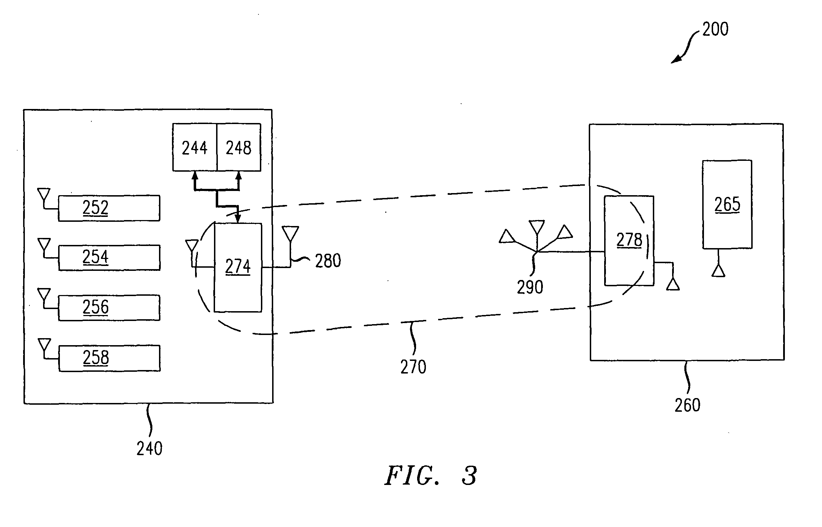

Referring to **FIG. 3**, another embodiment of the present invention is illustrated. More particularly, a wireless base transceiver station **200** is shown having a distributed architecture. Base transceiver station **200** employs a distributed architecture to circumvent the need for legal rights to lay down the fiber optic cable, much like wireless transceiver **10** of **FIG. 1** and base transceiver station **100** of **FIG. 2**.

To distribute base transceiver station **200**, components formulating the transmission equipment may be separated by functionality. The transmission equipment includes, for example, a radio frequency unit ("RFUs") **240** wirelessly coupled with a base band unit ("BBU") **260** by means of a wireless link **270**. To support wireless link **270**, RFU **240** comprises a transmitter-receiver **274** and an antenna **280**, while BBU includes a transmitter-receiver **278** and antenna **290**.

In addition to incorporating an external distributed architecture, transceiver station **200** also employ an internal distributed design. More particularly, RFU **240** comprises a number sub-components that wirelessly coupled to one another, aside from power amplifier **244** and a filter **248**. In place of an expensive, relatively heavy and sizeable backplane for mechanically coupling printed circuit boards together, the elements forming the radio in RFU **240** may be physically separated from each other, relying on wireless links. Consequently, an IF section **252**, an I&Q section **254**, an RF section **256** and a digital section **258** forming RFU **240** may communicate with each other and transmitter-receiver **274** via an RFU internal wireless link in place of a hard-wired cable. In so doing, the physical layout and design of RFU **240** may have greater flexibility, and may take advantage of the terrain, topography and/or landscape of the location of base transceiver station **200**. By this design, the architecture of RFU **240** may support expansion by the inclusion of new and/or additional components that may be coupled to existing components through the RFU internal wireless link.

Similarly, the elements forming BBU **260** may be physically separated from each other by relying on wireless links for coupling each together. Consequently, processor **265** for handling communication between the RFU and the mobile switching center may be wirelessly coupled with transmitter-receiver **278** via a BBU internal wireless link in place of a hard-wired cable. By this design, the layout and configuration of BBU **260** may have greater flexibility, and may take advantage of the terrain, topography and/or landscape of the location of base transceiver station **200**. It should be noted that by this design, the architecture of BBU **260** supports expansion by the inclusion of new and/or additional components that may be coupled to existing components through the BBU internal wireless link.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the spirit of the invention, as recited in the claims appended hereto. Consequently, the method, system and portions thereof and of the described method and system may be implemented in different locations, such as the wireless unit, the base station, a base station controller and/or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made to the present invention without strictly following the exemplary applications illustrated and described herein and without departing from the spirit and scope of the present invention It is therefore contemplated that the appended claims will cover any such modifications or embodiments as fall within the true scope of the invention.

## Claims

1. A wireless transceiver comprising:
at least one base band unit;
at least one radio frequency unit having at least one radio; and
a wireless link for wirelessly coupling the at least one baseband unit with the at least one radio.

2. The wireless transceiver of Claim **1**, wherein at least one of the base band unit and the radio frequency unit comprises a transmitter-receiver for supporting the wireless link.

3. The wireless transceiver of Claim **2**, wherein the transmitter-receiver comprises at least one of a line-of-sight transceiver and a broadcast transceiver.

4. The wireless transceiver of Claim **2**, wherein the radio comprises at least one of:
a demultiplexer for demultiplexing a received signal and a multiplexer for multiplexing a signal to be transmitted;
an authenticator for authenticating the received signal and an deauthenticator for deauthenticating the signal to be transmitted; and
a decryptor for decrypting the received signal and an encryptor for encrypting the signal to be transmitted.

5. The wireless transceiver of Claim **2**, wherein the at least one base band unit comprises a multi-headed air interface antenna for supporting the wireless link.

6. The wireless transceiver of Claim **5**, wherein the multi-headed air interface antenna comprises at least one antenna head per sector operative to support a data rate of at least 100 Mbps.

7. The wireless transceiver of Claim **5**, wherein the at least one radio comprises an RF antenna for supporting the wireless link, the RF antenna operative to support a data rate of at least 100 Mbps.

8. The wireless transceiver of Claim **2**, wherein the at least one base band unit comprises:
at least two base band unit printed circuit boards; and
a base band unit wireless link for wirelessly coupling the at least two base band unit printed circuit boards to each other.

9. The wireless transceiver of Claim **2**, wherein the at least one radio frequency unit comprises:
at least two radio frequency unit printed circuit boards; and
a radio frequency wireless link for wirelessly coupling the at least two radio frequency unit printed circuit boards to each other.

10. The wireless transceiver of Claim **2**, wherein the wireless link wirelessly couples at least one of an IF section, an I&Q section, and an RF section of the radio with the at least one base band unit.
